# EUROPÄISCHE PATENTSCHRIFT

(11) **EP 3 077 731 B1**
(45) Veröffentlichungstag und Bekanntmachung des Hinweises auf die Patenterteilung: **20.03.2019**
(21) Anmeldenummer: 14815441.2
(22) Anmeldetag: 25.11.2014
(51) Int. Cl.: F24C 3/12

(54) **HAUSHALTSGERÄT MIT EINEM GASBRENNER**
HOUSEHOLD APPLIANCE WITH A GAS BURNER
APPAREIL MÉNAGER AVEC UN BRÛLEUR À GAZ

(30) Priorität: 04.12.2013 ES 201331770
(43) Veröffentlichungstag der Anmeldung: 12.10.2016
(73) Patentinhaber: BSH Hausgeräte GmbH, 81739 München (DE)
(72) Erfinder: LOPEZ ORTIZ, Alberto, E-39004 Santander (ES); PALACIOS VALDUEZA, Luis Antonio, E-39610 Astillero (ES); PLACER MARURI, Emilio, E-39120 Liencres (ES); SAIZ GONZALEZ, Roberto, E-39539 Villapresente - Cantabria (ES)
(86) Internationale Anmeldenummer: PCT/IB2014/066310
(87) Internationale Veröffentlichungsnummer: WO 2015/083039

(56) Entgegenhaltungen:
- EP-A2- 1 477 738
- EP-A2- 2 341 291
- WO-A2-2013/175350
- DE-A1-102009 012 290
- US-A1- 2005 257 784
- US-A1- 2007 044 786
- US-A1- 2009 208 271
- US-B1- 6 354 637

## Beschreibung

Die vorliegende Erfindung betrifft ein Haushaltsgerät mit einem Gasbrenner und einer Gasversorgungseinrichtung.

Zum Befestigen eines Ventils, insbesondere eines Gasventils, in oder an einem Haushaltsgerät können Befestigungselemente verwendet werden. Derartige Befestigungselemente können mit Hilfe von in einem Gehäuse des Haushaltsgerätes vorgesehenen Bohrungen mit dem Gehäuse verschraubt oder vernietet sein.

Die US 2007/0044786 A1 beschreibt eine Montageeinrichtung zum Montieren von Gasventilen an einer Hauptgasleitung. Die Gasventile sind direkt an die Hauptgasleitung angeklemmt und werden von der Montageeinrichtung gehalten.

Die WO 2013/175350 A2 beschreibt ein gasbeheiztes Gargerät. Das Gasgerät weist eine Hauptgasleitung und Gasventile auf, die an der Hauptgasleitung angeklemmt sind.

Die EP 2 341 291 A2 beschreibt ein Befestigungsblech für die Befestigung eines Gasventils an einem Gassammelrohr. Mit Hilfe des Befestigungsblechs ist ein Gasventil direkt an das Gassammelrohr anklemmbar.

Die US 2005/0257784 A1 beschreibt eine Befestigungsvorrichtung zum Festklemmen eines Gasventils an einer Hauptgasleitung eines Kochgeräts.

Die US 6,354,637 B1 beschreibt eine Anordnung mit einem Ventil, einer Leitung und einem Verbindungsstück zum Verbinden des Ventils mit der Leitung.

Die US 2009/0208271 A1 beschreibt ein Kopplungssystem zum Koppeln mehrerer Verbindungsstücke mit einem Ventil.

Vor diesem Hintergrund besteht eine Aufgabe der vorliegenden Erfindung darin, eine verbessertes Haushaltsgerät zur Verfügung zu stellen.

Demgemäß wird ein Haushaltsgerät mit einem Gasbrenner und einer Gasversorgungseinrichtung für den Gasbrenner, mit einem Gasventil, einer Gasleitung, die dazu eingerichtet ist, dem Gasventil Gas zuzuleiten, und einer Befestigungsvorrichtung zum Befestigen des Gasventils an einem Gehäuse des Haushaltsgerätes vorgeschlagen. Die Befestigungsvorrichtung weist einen Ventilaufnahmeabschnitt zum Aufnehmen des Gasventils, einen Leitungsaufnahmeabschnitt zum Aufnehmen der Gasleitung und einen Befestigungsabschnitt auf. Der Befestigungsabschnitt ist dazu eingerichtet, die Befestigungsvorrichtung an dem Gehäuse zu befestigen, wobei ein Fluidkanal vorgesehen ist, der den Ventilaufnahmeabschnitt mit dem Leitungsaufnahmeabschnitt fluidisch verbindet.

Das Gehäuse kann eine Kochmuldenwanne einer Kochmulde eines Gasherdes sein. Die Befestigungsvorrichtung ist vorzugsweise in oder an der Kochmuldenwanne angeordnet. Insbesondere liegt der Befestigungsabschnitt auf einer Oberfläche des Gehäuses bzw. der Kochmuldenwanne auf. Die Gasleitung kann dem Gasventil ein Fluid, insbesondere ein Gas wie Erdgas, zuführen. An dem Gasventil ist vorzugsweise eine weitere Gasleitung vorgesehen, die das Fluid von dem Gasventil beispielsweise zu dem Gasbrenner leitet. Das Gasventil ist vorzugsweise dazu eingerichtet, einen Gasdurchfluss zu regeln.

Gemäß einer Ausführungsform ist der Befestigungsabschnitt dazu eingerichtet, die Befestigungsvorrichtung magnetisch, mechanisch oder mit Hilfe einer Klebung an dem Gehäuse zu befestigen.

Unter mechanisch ist beispielsweise eine Clips-, Niet- oder Schraubverbindung zu verstehen. Die Befestigungsvorrichtung kann zum Erzeugen einer Magnetkraft einen Permanentmagneten aufweisen. Der Permanentmagnet kann die Oberfläche des Gehäuses kontaktieren, auf der der Befestigungsabschnitt aufliegt. Alternativ kann der Permanentmagnet das Gehäuse an einer Oberfläche kontaktieren, die der Oberfläche, auf der der Befestigungsabschnitt aufliegt, gegenüberliegt. Das heißt, der Permanentmagnet und der Befestigungsabschnitt können an einander gegenüberliegenden Oberflächen der Kochmuldenwanne angeordnet sein. Dadurch, dass der Befestigungsabschnitt an dem Gehäuse befestigbar ist, kann die Befestigungsvorrichtung schnell und ohne zusätzliches Werkzeug montiert und demontiert werden. Auf das Vorsehen von Bohrungen an dem Gehäuse kann bei einer magnetischen Befestigung verzichtet werden.

Gemäß einer weiteren Ausführungsform ist der Befestigungsabschnitt plattenförmig.

Vorzugsweise weist der Befestigungsabschnitt die Form eines abgeflachten Quaders auf. Durch seine Geometrie liegt der Befestigungsabschnitt flächig auf dem Gehäuse auf. Hierdurch kann eine Magnetkraft oder Klebkraft mit Hilfe einer großen Oberfläche übertragen werden, wodurch die Befestigungsvorrichtung sicher an dem Gehäuse befestigbar ist.

Gemäß einer weiteren Ausführungsform weist die Befestigungsvorrichtung einen auf oder an dem Befestigungsabschnitt angeordneten Grundkörper auf, der den Ventilaufnahmeabschnitt und den Leitungsaufnahmeabschnitt aufweist.

Der Grundkörper ist vorzugsweise quaderförmig. Der Grundkörper ist insbesondere auf oder an einer Oberseite des Befestigungsabschnittes angeordnet.

Der Ventilaufnahmeabschnitt ist mittels eines Fluidkanals mit dem Leitungsaufnahmeabschnitt fluidisch verbunden.

Der Fluidkanal verläuft vorzugsweise horizontal in dem Grundkörper. Der Fluidkanal verbindet insbesondere eine Bohrung des Ventilaufnahmeabschnittes mit einer Bohrung des Leitungsaufnahmeabschnittes.

Gemäß einer weiteren Ausführungsform weist der Befestigungsabschnitt zumindest teilweise ein magnetisches Material auf.

Beispielsweise kann der Befestigungsabschnitt teilweise oder vollständig magnetisiert sein.

Gemäß einer weiteren Ausführungsform umfasst der Befestigungsabschnitt einen Permanentmagneten.

Dies ermöglicht eine kostengünstige Herstellung der Befestigungsvorrichtung. Der Permanentmagnet ist vorzugsweise plattenförmig. Insbesondere ist der Permanentmagnet an einer Unterseite des Befestigungsabschnittes angeordnet. Ferner kann mit Hilfe des Permanentmagneten über die gesamte Lebensdauer der Befestigungsvorrichtung zuverlässig die Magnetkraft erzeugt werden. Ein ungewünschtes Ablösen der Befestigungsvorrichtung von dem Gehäuse wird dadurch verhindert.

Gemäß einer weiteren Ausführungsform sind der Befestigungsabschnitt und der Grundkörper materialeinstückig ausgebildet.

Dies ermöglicht eine kostengünstige und schnelle Herstellung der Befestigungsvorrichtung. Beispielsweise kann die Befestigungsvorrichtung als Gussbauteil gefertigt sein.

Gemäß einer weiteren Ausführungsform weist die Befestigungsvorrichtung zumindest ein Befestigungselement auf, das dazu eingerichtet ist, einen Ventilflansch des Ventils gegen den Ventilaufnahmeabschnitt zu pressen.

Vorzugsweise weist die Befestigungsvorrichtung zwei Befestigungselemente auf, die jeweils seitlich an dem Ventilaufnahmeabschnitt angeordnet sind. Die Befestigungselemente sind insbesondere Schrauben. Die Befestigungselemente greifen vorzugsweise in an dem Ventilflansch vorgesehene korrespondierende Gewindebohrungen ein. Mit Hilfe der Befestigungselemente kann das Ventil schnell an der Befestigungsvorrichtung montiert und von dieser demontiert werden.

Gemäß einer weiteren Ausführungsform weist die Befestigungsvorrichtung eine Dichteinrichtung auf, die zwischen dem Ventilaufnahmeabschnitt und dem Ventilflansch angeordnet ist.

Die Dichteinrichtung ist vorzugsweise zumindest teilweise aus einem flexiblen Werkstoff gefertigt. Die Dichteinrichtung ermöglicht eine verbesserte fluiddichte Abdichtung des Ventilflansches gegenüber dem Ventilaufnahmeabschnitt.

Gemäß einer weiteren Ausführungsform weist der Leitungsaufnahmeabschnitt ein Innengewinde auf.

In das Innengewinde greift ein Außengewinde eines Befestigungsabschnittes der Leitung ein. Dies ermöglicht eine schnelle, komfortable und wieder lösbare Montage der Leitung an der Befestigungsvorrichtung.

Gemäß einer weiteren Ausführungsform ist die Befestigungsvorrichtung zumindest teilweise aus einem Metallwerkstoff gefertigt.

Hierdurch ist die Befestigungsvorrichtung widerstandsfähig gegen eine hohe Temperaturbelastung. Die Befestigungsvorrichtung kann eine Oberflächenbeschichtung wie beispielsweise eine Pulverbeschichtung oder eine Emaillierung aufweisen. Hierdurch ist die Befestigungsvorrichtung vor Korrosion geschützt.

Gemäß einer weiteren Ausführungsform sind der Leitungsaufnahmeabschnitt und der Ventilaufnahmeabschnitt derart mit Fügeflächen versehen, dass ausschließlich ein vorgegebener orientierter Zusammenbau der Befestigungsvorrichtung mit dem Ventil und der Leitung ermöglicht ist.

Hierdurch wird zuverlässig eine Fehlmontage verhindert. Die Fügefläche des Ventilaufnahmeabschnitts wölbt sich vorzugsweise kreisbogenförmig aus dem Grundkörper heraus. Die Fügefläche des Leitungsaufnahmeabschnittes ist vorzugsweise ein konischer Bohrungsabschnitt, der korrespondierend zu einem Dichtabschnitt der Leitung ausgebildet ist.

Gemäß einer weiteren Ausführungsform weist die Befestigungsvorrichtung einen Aufnahmeabschnitt zum Aufnehmen einer magnetischen Betätigungseinheit des Gasventils auf.

Hierdurch wird ein kompakter Aufbau der Gasversorgungseinrichtung erzielt.

Weitere vorteilhafte Ausgestaltungen und Aspekte der Erfindung sind Gegenstand der Unteransprüche. Im Weiteren wird die Erfindung anhand von bevorzugten Ausführungsformen unter Bezugnahme auf die beigelegten Figuren näher erläutert.
Fig. 1 zeigt eine schematische perspektivische Ansicht einer Ausführungsform einer Gasversorgungsanordnung;
Fig. 2 zeigt eine schematische perspektivische Ansicht einer Ausführungsform einer Befestigungsvorrichtung der Gasversorgungsanordnung gemäß der Fig. 1;
Fig. 3 zeigt eine weitere schematische perspektivische Ansicht der Befestigungsvorrichtung gemäß der Fig. 2; und
Fig. 4 zeigt eine schematische Schnittansicht der Befestigungsvorrichtung gemäß der Fig.2.

In den Figuren sind gleiche oder funktionsgleiche Elemente mit denselben Bezugszeichen versehen worden, sofern nichts anderes angegeben ist.

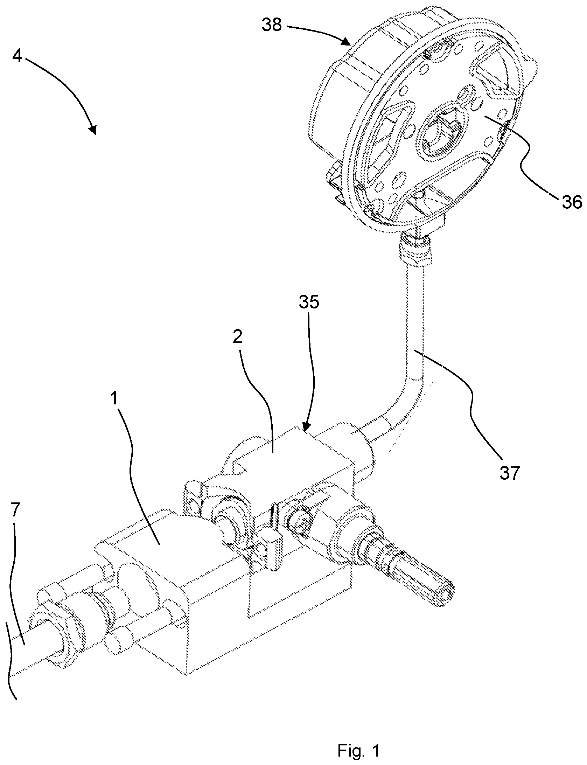

Die Fig. 1 zeigt eine schematische perspektivische Ansicht einer Kochstelle 38. Die Kochstelle 38 ist insbesondere eine Gaskochstelle. Die Kochstelle 38 kann Teil eines Haushaltsgeräts 4, beispielsweise eines Herds sein. Die Kochstelle 38 kann eine Gasversorgungseinrichtung 35 für einen Gasbrenner 36 aufweisen. Die Gasversorgungseinrichtung 35 umfasst ein Gasventil 2 und eine Gasleitung 7, die dazu eingerichtet ist, dem Gasventil 2 Gas zuzuleiten. Das Gasventil 2 ist mit Hilfe einer weiteren Gasleitung 37 mit dem Gasbrenner 36 fluidisch verbunden. Die Gasversorgungseinrichtung 35 umfasst ferner eine Befestigungsvorrichtung 1.

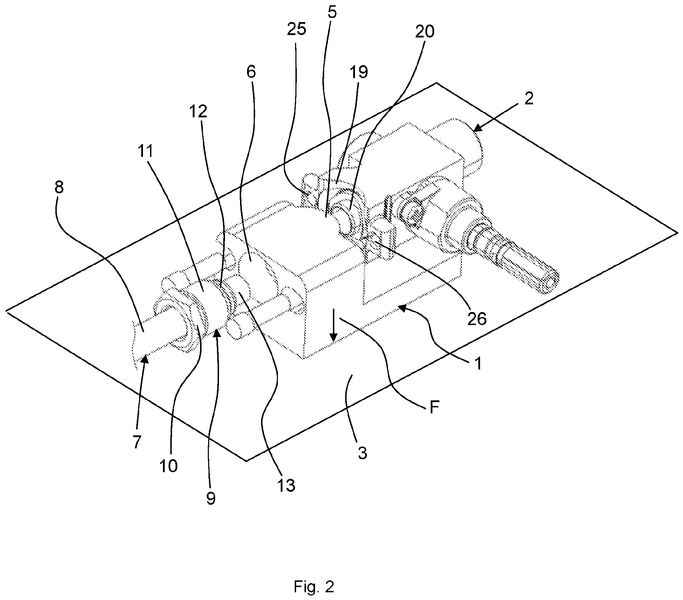

Die Fig. 2 zeigt eine schematische perspektivische Ansicht der Befestigungsvorrichtung 1 zum Befestigen des Gasventils 2 an einem Gehäuse 3 des Haushaltsgeräts 4. Das Gasventil 2 kann ein Auf-Zu-Ventil oder ein regelbares Ventil sein.

Die Befestigungsvorrichtung 1 weist einen Ventilaufnahmeabschnitt 5 zum Aufnehmen des Gasventils 2 und einen Leitungsaufnahmeabschnitt 6 zum Aufnehmen der Gasleitung 7 auf. Die Gasleitung 7 kann ein Leitungsrohr 8 und einen Befestigungsabschnitt 9 aufweisen. Der Befestigungsabschnitt 9 ist mit dem Leitungsrohr 8 verbunden. Beispielsweise kann der Befestigungsabschnitt 9 relativ zu dem Leitungsrohr 8 drehbar sein. Der Befestigungsabschnitt 9 kann beispielsweise einen Außensechskant 10, der mit Hilfe eines Gabelschlüssels greifbar ist, und ein Außengewinde 11 aufweisen. Ferner kann der Befestigungsabschnitt 9 einen konischen Dichtabschnitt 12 aufweisen. Das Leitungsrohr 8 kann mit einem Endabschnitt 13 aus dem Befestigungsabschnitt 9 herausragen. Der Endabschnitt 13 kann beispielsweise umgebördelt sein, so dass der Befestigungsabschnitt 9 nicht in Richtung des Endabschnittes 13 von dem Leitungsrohr 8 abrutschen kann.

Die Gasleitung 7 ist dazu eingerichtet, dem Gasventil 2 Gas zuzuleiten. Das Gas kann Propangas, Stadtgas, Erdgas oder dergleichen sein. Die Befestigungsvorrichtung 1 weist ferner einen Befestigungsabschnitt 14 auf, der dazu eingerichtet ist, die Befestigungsvorrichtung 1 an dem Gehäuse 3 zu befestigen. Insbesondere ist der Befestigungsabschnitt 14 dazu eingerichtet, die Befestigungsvorrichtung 1 mit Hilfe einer Magnetkraft F an dem Gehäuse zu befestigen. Die Fig. 2 ist eine Explosionsdarstellung. Das heißt, die Gasleitung 7 und das Gasventil 2 sind nicht an der Befestigungsvorrichtung 1 montiert.

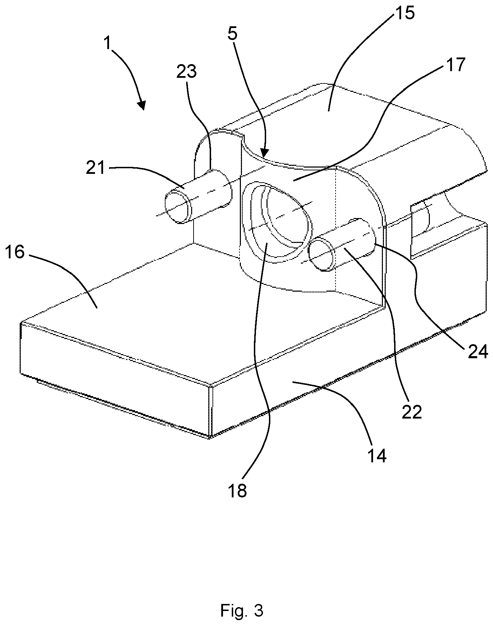

Die Fig. 3 zeigt eine weitere schematische perspektivische Ansicht der Befestigungsvorrichtung 1. Der Befestigungsabschnitt 14 ist vorzugsweise plattenförmig. Insbesondere weist der Befestigungsabschnitt 14 eine abgeflachte quaderförmige Geometrie auf.

Auf oder an dem Befestigungsabschnitt 14 ist ein Grundkörper 15 angeordnet, der den Ventilaufnahmeabschnitt 5 und den Leitungsaufnahmeabschnitt 6 aufweist. Vorzugsweise ist der Grundkörper 15 auf oder an einer Oberseite 16 des Befestigungsabschnittes 14 angeordnet. Der Grundkörper 15 weist eine Quaderform auf. Der Befestigungsabschnitt 14 und der Grundkörper 15 sind vorzugsweise materialeinstückig ausgebildet.

Der Ventilaufnahmeabschnitt 5 weist eine sich aus dem Grundkörper 15 herauswölbende kreisbogenförmige Fügefläche 17 auf. Der Ventilaufnahmeabschnitt 5 weist ferner eine die Fügefläche 17 durchbrechende Bohrung 18 auf. Die Fügefläche 17 ist korrespondierend zu einem Ventilflansch 19 (Fig. 1) des Gasventils 2 ausgebildet. Die Bohrung 18 des Ventilaufnahmeabschnittes 5 ist derart positioniert, dass diese kollinear mit einem Anschlussstück 20 des Ventilflansches 19 angeordnet ist. Das Anschlussstück 20 kann in die Bohrung 18 hineinragen, wenn das Gasventil 2 an dem Ventilaufnahmeabschnitt 5 montiert ist. Die Fügefläche 17 ermöglicht einen ausschließlichen Zusammenbau des Ventilaufnahmeabschnittes 5 mit dem Gasventil 2.

Die Befestigungsvorrichtung 1 kann zumindest ein Befestigungselement 21, 22 aufweisen, das dazu eingerichtet ist, den Ventilflansch 19 des Gasventils 2 gegen den Ventilaufnahmeabschnitt 5, insbesondere gegen die Fügefläche 17, zu pressen. Vorzugsweise sind zwei Befestigungselemente 21, 22 vorgesehen, die beidseitig der Fügefläche 17 angeordnet sind. Jedes Befestigungselement 21, 22 ist jeweils durch eine Durchgangsbohrung 23, 24 des Grundkörpers 15 hindurchgeführt. Die Durchgangsbohrungen 23, 24 sind jeweils seitlich der Fügefläche 17 angeordnet. Die Befestigungselemente 21, 22 sind vorzugsweise als Schrauben ausgeführt, die in korrespondierende Gewindebohrungen 25, 26 des Ventilflansches 19 eingreifen (Fig. 2).

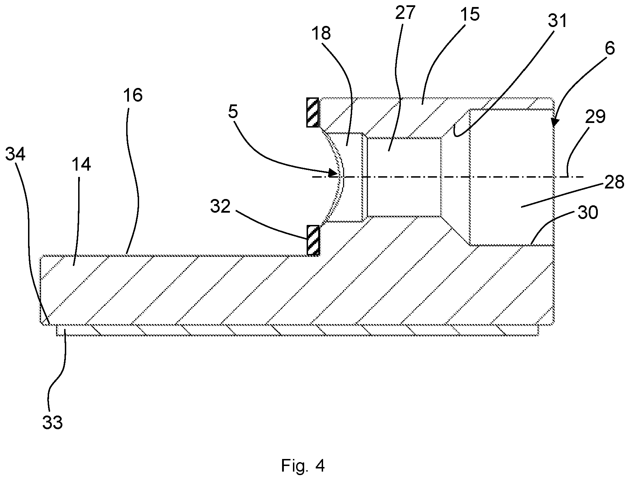

Die Fig. 4 zeigt eine schematische Schnittansicht der Befestigungsvorrichtung 1. In dem Grundkörper 15 ist ein Fluidkanal 27 vorgesehen, der den Ventilaufnahmeabschnitt 5, insbesondere die Bohrung 18 des Ventilaufnahmeabschnittes 5, mit dem Leitungsaufnahmeabschnitt 6, insbesondere mit einer Bohrung 28 des Leitungsaufnahmeabschnitts 6, fluidisch verbindet. Eine gemeinsame Mittelachse 29 der Bohrungen 18, 28 und des Fluidkanals 27 ist vorzugsweise parallel zu der Oberseite 16 des Befestigungsabschnitts 14 angeordnet.

Der Leitungsaufnahmeabschnitt 6 weist vorzugsweise ein korrespondierend zu dem Außengewinde 11 des Befestigungsabschnittes 9 der Gasleitung 7 ausgebildetes Innengewinde 30 auf. Das Innengewinde 30 ist in der Bohrung 28 des Leitungsaufnahmeabschnittes 6 vorgesehen. Der Leitungsaufnahmeabschnitt 6 weist ferner eine Fügefläche 31 auf. Die Fügefläche 31 ist vorzugsweise konisch. Die Fügefläche 31 ist korrespondierend zu dem Dichtabschnitt 12 des Befestigungsabschnittes 9 der Gasleitung 7 ausgebildet. Die Fügefläche 31 ermöglicht einen ausschließlichen Zusammenbau des Leitungsaufnahmeabschnittes 6 mit der Gasleitung 7.

Die Befestigungsvorrichtung 1 kann eine Dichteinrichtung 32 aufweisen, die zwischen dem Ventilaufnahmeabschnitt 5 und dem Ventilflansch 19 angeordnet ist.

Der Befestigungsabschnitt 14 weist vorzugsweise zumindest teilweise ein magnetisches Material auf. Vorzugsweise weist der Befestigungsabschnitt 14 zumindest einen Permanentmagneten 33 auf. Der Befestigungsabschnitt 14 kann eine Vielzahl an Permanentmagneten 33 aufweisen. Vorzugsweise ist der Permanentmagnet 33 plattenförmig. Der Permanentmagnet 33 ist an einer Unterseite 34 des Befestigungsabschnittes 14 vorgesehen. Der Permanentmagnet 33 kann materialeinstückig mit dem Befestigungsabschnitt 14 ausgebildet sein. Beispielsweise kann der Befestigungsabschnitt 14 vollständig oder teilweise magnetisiert sein.

Die Befestigungsvorrichtung 1 ist zumindest teilweise aus einem Metallwerkstoff gefertigt.

### Verwendete Bezugszeichen:

- 1: Befestigungsvorrichtung
- 2: Gasventil
- 3: Gehäuse
- 4: Haushaltsgerät
- 5: Ventilaufnahmeabschnitt
- 6: Leitungsaufnahmeabschnitt
- 7: Gasleitung
- 8: Leitungsrohr
- 9: Befestigungsabschnitt
- 10: Außensechskant
- 11: Außengewinde
- 12: Dichtabschnitt
- 13: Endabschnitt
- 14: Befestigungsabschnitt
- 15: Grundkörper
- 16: Oberseite
- 17: Fügefläche
- 18: Bohrung
- 19: Ventilflansch
- 20: Anschlussstück
- 21: Befestigungselement
- 22: Befestigungselement
- 23: Durchgangsbohrung
- 24: Durchgangsbohrung
- 25: Gewindebohrung
- 26: Gewindebohrung
- 27: Fluidkanal
- 28: Bohrung
- 29: Mittelachse
- 30: Innengewinde
- 31: Fügefläche
- 32: Dichteinrichtung
- 33: Permanentmagnet
- 34: Unterseite
- 35: Gasversorgungseinrichtung
- 36: Gasbrenner
- 37: Gasleitung
- 38: Kochstelle

- F: Magnetkraft

## Patentansprüche

1. Haushaltsgerät (4) mit einem Gasbrenner (36) und einer Gasversorgungseinrichtung (35) für den Gasbrenner (36), mit einem Gasventil (2), einer Gasleitung (7), die dazu eingerichtet ist, dem Gasventil (2) Gas zuzuleiten, und einer Befestigungsvorrichtung (1) zum Befestigen des Gasventils (2) an einem Gehäuse (3) des Haushaltsgerätes (4), wobei die Befestigungsvorrichtung (1) einen Ventilaufnahmeabschnitt (5) zum Aufnehmen des Gasventils (2), einen Leitungsaufnahmeabschnitt (6) zum Aufnehmen der Gasleitung (7) und einen Befestigungsabschnitt (14) umfasst, der dazu eingerichtet ist, die Befestigungsvorrichtung (1) an dem Gehäuse (3) zu befestigen, **gekennzeichnet durch** einen Fluidkanal (27), der den Ventilaufnahmeabschnitt (5) mit dem Leitungsaufnahmeabschnitt (6) fluidisch verbindet.

2. Haushaltsgerät nach Anspruch 1, **dadurch gekennzeichnet, dass** der Befestigungsabschnitt (14) dazu eingerichtet ist, die Befestigungsvorrichtung (1) magnetisch, mechanisch oder mit Hilfe einer Klebung an dem Gehäuse (3) zu befestigen.

3. Haushaltsgerät nach Anspruch 1 oder 2, **dadurch gekennzeichnet, dass** der Befestigungsabschnitt (14) plattenförmig ist.

4. Haushaltsgerät nach einem der Ansprüche 1 - 3, **gekennzeichnet durch** einen auf oder an dem Befestigungsabschnitt (14) angeordneten Grundkörper (15), der den Ventilaufnahmeabschnitt (5) und den Leitungsaufnahmeabschnitt (6) aufweist.

5. Haushaltsgerät nach einem der Ansprüche 1 - 4, **dadurch gekennzeichnet, dass** der Befestigungsabschnitt (14) zumindest teilweise ein magnetisches Material aufweist.

6. Haushaltsgerät nach Anspruch 5, **dadurch gekennzeichnet, dass** der Befestigungsabschnitt (14) einen Permanentmagneten (33) umfasst.

7. Haushaltsgerät nach Anspruch 4 und 5 oder 6, **dadurch gekennzeichnet, dass** der Befestigungsabschnitt (14) und der Grundkörper (15) materialeinstückig ausgebildet sind.

8. Haushaltsgerät nach einem der Ansprüche 1 - 7, **gekennzeichnet durch** zumindest ein Befestigungselement (21, 22), das dazu eingerichtet ist, einen Ventilflansch (19) des Gasventils (2) gegen den Ventilaufnahmeabschnitt (5) zu pressen.

9. Haushaltsgerät nach Anspruch 8, **gekennzeichnet durch** eine Dichteinrichtung (32), die zwischen dem Ventilaufnahmeabschnitt (5) und dem Ventilflansch (19) angeordnet ist.

10. Haushaltsgerät nach einem der Ansprüche 1 - 9, **dadurch gekennzeichnet, dass** der Leitungsaufnahmeabschnitt (6) ein Innengewinde (30) aufweist.

11. Haushaltsgerät nach einem der Ansprüche 1 - 10, **dadurch gekennzeichnet, dass** die Befestigungsvorrichtung (14) zumindest teilweise aus einem Metallwerkstoff gefertigt ist.

12. Haushaltsgerät nach einem der Ansprüche 1 - 11, **dadurch gekennzeichnet, dass** der Leitungsaufnahmeabschnitt (5) und der Ventilaufnahmeabschnitt (6) derart mit Fügeflächen (17, 31) versehen sind, dass ausschließlich ein vorgegebener orientierter Zusammenbau der Befestigungsvorrichtung (1) mit dem Gasventil (2) und der Gasleitung (7) ermöglicht ist.

13. Haushaltsgerät nach einem der Ansprüche 1 - 12, **dadurch gekennzeichnet, dass** die Befestigungsvorrichtung (1) einen Aufnahmeabschnitt zum Aufnehmen einer magnetischen Betätigungseinheit des Gasventils (2) aufweist.

## Claims

1. Household appliance (4) with a gas burner (36) and a gas supply facility (35) for the gas burner (36), with a gas valve (2), a gas line (7), which is configured to feed gas to the gas valve (2), and a fastening apparatus (1) for fastening the gas valve (2) to a housing (3) of the household appliance (4), wherein the fastening apparatus (1) comprises a valve receiving section (5) for receiving the gas valve (2), a line receiving section (6) for receiving the gas line (7) and a fastening section (14), which is configured to fasten the fastening apparatus (1) to the housing (3), **characterised by** a fluid duct (27) which fluidically connects the valve receiving section (5) to the line receiving section (6).

2. Household appliance according to claim 1, **characterised in that** the fastening section (14) is configured to fasten the fastening apparatus (1) to the housing (3) magnetically, mechanically or with the aid of an adhesive.

3. Household appliance according to claim 1 or 2, **characterised in that** the fastening section (14) is plate-shaped.

4. Household appliance according to one of claims 1 - 3, **characterised by** a base body (15) arranged at or on the fastening section (14), which has the valve receiving section (5) and the line receiving section (6).

5. Household appliance according to one of claims 1 - 4, **characterised in that** the fastening section (14) at least partially has a magnetic material.

6. Household appliance according to claim 5, **characterised in that** the fastening section (14) comprises a permanent magnet (33).

7. Household appliance according to claim 4 and 5 or 6, **characterised in that** the fastening section (14) and the base body (15) are embodied from one piece of material.

8. Household appliance according to one of claims 1 - 7, **characterised by** at least one fastening element (21, 22), which is configured to press a valve flange (19) of the gas valve (2) against the valve receiving section (5).

9. Household appliance according to claim 8, **characterised by** a sealing facility (32), which is arranged between the valve receiving section (5) and the valve flange (19).

10. Household appliance according to one of claims 1 - 9, **characterised in that** the line receiving section (6) has an internal thread (30).

11. Household appliance according to one of claims 1 - 10, **characterised in that** the fastening apparatus (14) is manufactured at least partially from a metal material.

12. Household appliance according to one of claims 1 - 11, **characterised in that** the line receiving section (5) and the valve receiving section (6) are provided with joining surfaces (17, 31) in such a manner that an assembly of the fastening apparatus (1) with the gas valve (2) and the gas line (7) is exclusively made possible in a predefined orientation.

13. Household appliance according to one of claims 1 - 12, **characterised in that** the fastening apparatus (1) has a receiving section for receiving a magnetic fastening unit of the gas valve (2).

## Revendications

1. Appareil ménager (4) comprenant un brûleur à gaz (36) et un moyen d'alimentation de gaz (35) pour le brûleur à gaz (36) comportant un robinet à gaz (2), un conduit de gaz (7) configuré pour amener du gaz au robinet à gaz (2) et un dispositif de fixation (1) destiné à fixer le robinet à gaz (2) à un boîtier (3) de l'appareil ménager (4), dans lequel le dispositif de fixation (1) comprend une partie de réception de robinet (5) pour recevoir le robinet à gaz (2), une partie de réception de conduit (6) pour recevoir le conduit de gaz (7) et une partie de fixation (14) conçue pour fixer le dispositif de fixation (1) au boîtier (3),
**caractérisé par** un canal de fluide (27) qui relie fluidiquement la partie de réception de robinet (5) à la partie de réception de conduit (6).

2. Appareil ménager selon la revendication 1, **caractérisé en ce que** la partie de fixation (14) est configurée pour fixer le dispositif de fixation (1) magnétiquement, mécaniquement ou au moyen d'un collage au boîtier (3).

3. Appareil ménager selon la revendication 1 ou 2, **caractérisé en ce que** la partie de fixation (14) est en forme de plaque.

4. Appareil ménager selon l'une des revendications 1 à 3, **caractérisé par** un corps de base (15) disposé sur ou au niveau de la partie de fixation (14), lequel corps de base comprend la partie de réception de robinet (5) et la partie de réception de conduit (6).

5. Appareil ménager selon l'une des revendications 1 à 4, **caractérisé en ce que** la partie de fixation (14) comprend au moins en partie un matériau magnétique.

6. Appareil ménager selon la revendication 5, **caractérisé en ce que** la partie de fixation (14) comprend un aimant permanent (33).

7. Appareil ménager selon les revendications 4 et 5 ou 6, **caractérisé en ce que** la partie de fixation (14) et le corps de base (15) sont constitués d'un seul tenant.

8. Appareil ménager selon l'une des revendications 1 à 7, **caractérisé par** au moins un élément de fixation (21, 22) qui est configuré pour presser une bride de robinet (19) du robinet à gaz (2) contre la partie de réception du robinet (5).

9. Appareil ménager selon la revendication 8, **caractérisé par** un dispositif d'étanchéité (32) qui est disposé entre la partie de réception de robinet (5) et la bride de robinet (19).

10. Appareil ménager selon l'une des revendications 1 à 9, **caractérisé en ce que** la partie de réception de conduit (6) comprend un filetage intérieur (30).

11. Appareil ménager selon l'une des revendications 1 à 10, **caractérisé en ce que** le dispositif de fixation (14) est fabriqué au moins en partie en un matériau métallique.

12. Appareil ménager selon l'une des revendications 1 à 11, **caractérisé en ce que** la partie de réception de conduit (5) et la partie de réception de robinet (6) sont pourvues de surfaces de jonction (17, 31) de telle manière qu'uniquement un assemblage orienté de façon prédéterminée du dispositif de fixation (1) avec le robinet à gaz (2) et le conduit de gaz (7) est rendu possible.

13. Appareil ménager selon l'une des revendications 1 à 12, **caractérisé en ce que** le dispositif de fixation (1) comprend une partie de réception pour recevoir une unité d'actionnement magnétique du robinet à gaz (2).
